# EUROPÄISCHE PATENTSCHRIFT

(11) **EP 1 039 153 B1**
(45) Veröffentlichungstag und Bekanntmachung des Hinweises auf die Patenterteilung: **24.09.2003**
(21) Anmeldenummer: 00200917.3
(22) Anmeldetag: 13.03.2000
(51) Int. Cl.: F16B 37/04

(54) **Vormontierte Befestigungseinheit**
Preassembled fastening device
Dispositif de fixation préassemblé

(30) Priorität: 19.03.1999 NL 1011607
(43) Veröffentlichungstag der Anmeldung: 27.09.2000
(73) Patentinhaber: J. van Walraven B.V., 3641 RK Mijdrecht (NL)
(72) Erfinder: van Walraven, Jan, 3641 GP Mijdrecht (NL)
(74) Vertreter: Brookhuis, Hendrik Jan Arnold

(56) Entgegenhaltungen:
- EP-A- 0 775 838
- WO-A-92/13202
- FR-A- 2 141 012
- US-A- 4 666 355

## Beschreibung

Die vorliegende Erfindung bezieht sich auf eine vormontierte Befestigungseinheit nach dem Oberbegriff des Anspruchs 1.

Eine derartige Befestigungseinheit ist zum Beispiel aus der US 4 830 531 und der NL 1005552 bekannt. Bei diesen bekannten Befestigungseinheiten ist der starre Körper als Verbindungsteil ausgelegt, um mehrere Profilelemente miteinander zu verbinden und ist deshalb mit mehreren Anlegeflächen versehen, wobei bei jeder Anlegefläche ein oder mehrere längliche Mutterkörper vormontiert sind. Die Profilelemente sind üblicherweise längliche metallene Profilelemente, in der Fachwelt wegen ihres im wesentlichen C-förmigen Querschnitts als C-Profilschienen bekannt.

Bei den aus der NL 1005552 bekannten Befestigungseinheiten ist vorgesehen, die längliche Mutter in dem Zeitraum zwischen der Herstellung der Einheit, der Vormontage, und ihrer Befestigung an einem Profilelement mittels eines Anliegens unter Federspannung der länglichen Mutter an an dem starren Körper angeformten Vorsprüngen in ihrer Vormontagestellung zu halten. Hierdurch wird die längliche Mutter auf der Grundlage von Reibung in ihrer Vormontagestellung gehalten.

Es hat sich gezeigt, daß das Einstellen der richtigen Vorspannung bei der Herstellung problematisch ist, und auch hat sich herausgestellt, daß die Befestigungseinheiten in der Praxis oft derart grob behandelt werden, daß doch ein erheblicher Prozentsatz der länglichen Muttern unerwünscht aus der Vormontagestellung herausdreht, was dem Monteur zusätzliche Arbeit bereitet.

In einer anderen Ausbildung, auf die sich die vorliegende Anmeldung bezieht, dient der starre Körper nicht als Verbindungsorgan zum gegenseitigen Verbinden von Profilelementen, sondern umfaßt die Befestigungseinheit nur einen einzigen Mutterkörper, und ist der starre Körper mit einer einzigen Öffnung für ein stabförmiges Bolzenteil versehen, das bereits bei der Vormontage, oder später an dem Mutterkörper festgesetz wird. Zum Beipiel ist der starre Körper hierbei ein U-förmig gebogenes Metallteil, dessen Schenkel sich außen entlang dem Profilelement legen, wenn der Zwischenkörper an der mit Flanschen versehenen Seite des Profilelements anliegt. Dabei ist dann die Öffnung für das bereits angeordnete, oder später anzuordnende stabförmige Bolzenteil in dem Zwischenkörper angeordnet. Auch bei einer derartigen Ausbildung ist es vorteilhaft für die Tätigkeiten des Monteurs, wenn der längliche Mutterkörper in einer Vormontagestellung relativ zu dem starren Körper gesichert ist.

Der vorliegenden Erfindung liegt nach einem ersten Aspekt die Aufgabe zugrunde, eine verbesserte Sicherung des länglichen Mutterkörpers in der Vormontagestellung zu schaffen, so daß die Befestigungseinheit schnell und leicht montiert werden kann. Insbesondere ist es die Aufgabe der Erfindung, diese Verbesserung ohne eine wesentliche Kostpreiserhöhung in Bezug auf die bekannten Befestigungseinheiten, und mit herstellungstechnisch einfachen Maßnahmen durchzuführen. Die vorliegende Erfindung schafft dazu eine Befestigungseinheit nach Anspruch 1.

Durch die Maßnahmen des kennzeichenden Teils des Anspruchs 1 wird erreicht, daß in der Vormontagestellung des länglichen Mutterkörpers von einer formgeschlossenen rotationsverhindernden Verbindung zwischen dem länglichen Mutterkörper und dem starren Körper die Rede ist. In einer bevorzugten Ausbildung kann diese Verbindung dadurch aufgehoben werden, daß der längliche Mutterkörper sich von dem starren Körper wegbewegt, so daß der längliche Mutterkörper anschließend in seine Haltestellung gedreht werden kann.

Nach einem zweiten Aspekt schafft die vorliegende Erfindung ein System nach Anspruch 23.

Weitere vorteilhafte Ausbildungen der Erfindung sind in den Ansprüchen und in der nachfolgenden Beschreibung anhand der Zeichnung beschrieben. Es zeigt:
- Fig. 1: eine Seitenansicht eines Ausbildungsbeispiel der erfindungsgemäßen Befestigungseinheit,
- Fig. 2: einen Teilschnitt durch ein Detail der Figur 1,
- Fig. 3a: eine Seitenansicht des Nockenteils der Befestigungseinheit nach den Figuren 1 und 2,
- Fig. 3b: eine andere Seitenansicht des Nockenteils der Figur 3a,
- Fig. 3c: das Nockenteil in einer Draufsicht,
- Fig. 4a: in einer Draufsicht den länglichen Mutterkörper der Befestigungseinheit nach den Figuren 1 und 2,
- Fig. 4b: den Mutterkörper der Figur 4a im Längsschnitt,
- Fig. 5: eine Aufsicht auf einen schenkel des abgewinkelten starren Körpers nach den Figuren 1 und 2,
- Fig. 6a: in einer Seitenansicht das Federelement der Befestigungseinheit nach den Figuren 1 und 2,
- Fig. 6b: das Federelement in einer anderen Seitenansicht,
- Fig. 6c: eine Draufsicht auf das Federelement,
- Fig. 7a: eine Aufsicht auf die Unterlegscheibe der Befestigungseinheit nach den Figuren 1 und 2,
- Fig. 7b: die Unterlegscheibe in einer Seitenansicht,
- Fig. 8: im Querschnitt ein Ausbildungsbeispiel eines Profilelements, an dem eine erfindungsgemäße Befestigungseinheit festgesetzt werden kann.

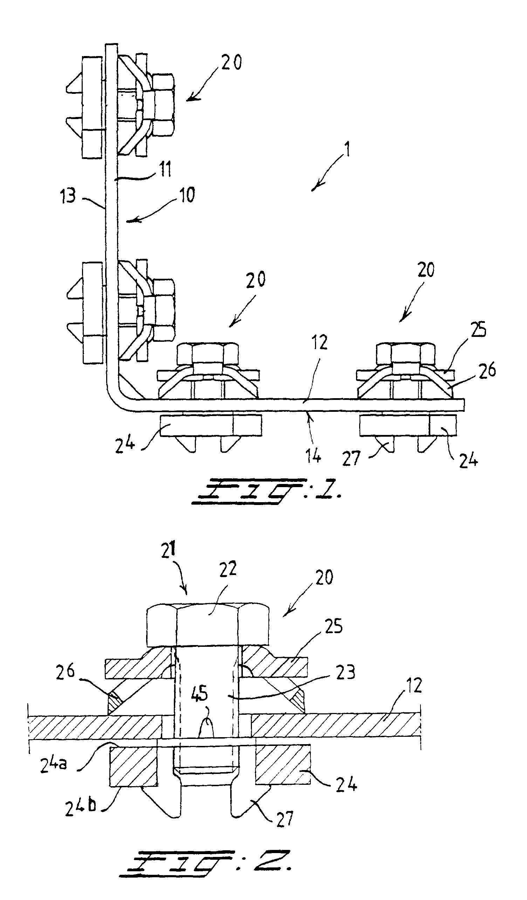

Die in Figur 1 gezeigte, bei ihrer Herstellung als ein Ganzes vormontierte Befestigungseinheit 1, ist dazu vorgesehen, Profilelemente mit einer ähnlichen länglichen metallenen Querschnittsform in einem rechten Winkel miteinander zu verbinden. In Figur 8 ist der typische C-förmige Querschnitt eines derartigen Profilelements ersichtlich. Das Profilelement 2 hat hier zwei parallele, und sich in Längsrichtung erstreckende Seiten 3, 4, einen Boden 5, der die Seiten 3, 4 verbindet, und eine Oberseite, die von zwei ab den Seiten 3, 4 nach innen gerichteten Flanschen 6, 7, die zwischen sich einen Längsschlitz 8 begrenzen, gebildet ist. Der Längsschlitz 8 erstreckt sich über die ganze Länge des Profilelements 2. Auch können in dem Boden 5 über die Länge des Profilelements verteilt mehrere längliche Langlöcher vorhanden sein, an denen eine erfindungsgemäße Befestigungseinheit angeordnet werden kann.

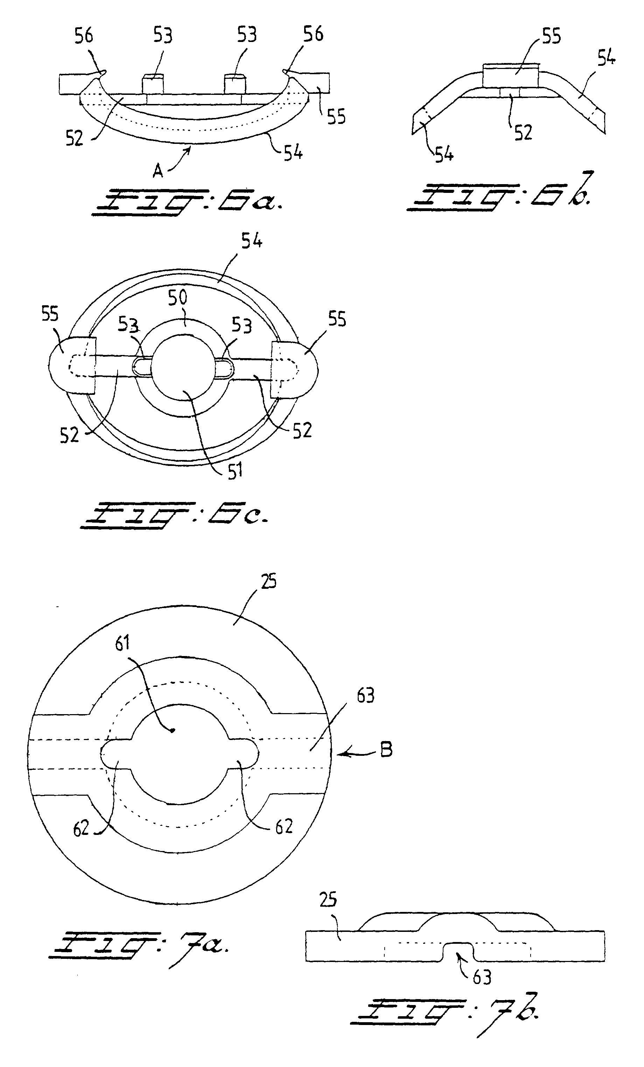

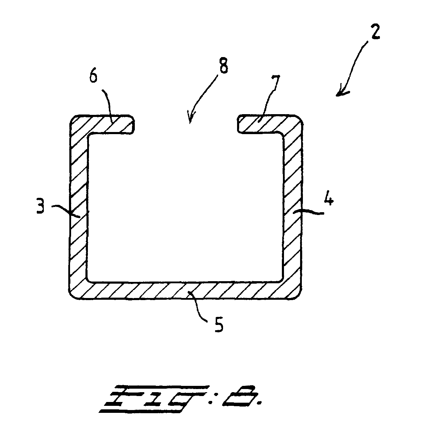

Die Befestigungseinheit 1 umfaßt einen im wesentlichen starren Körper 10 mit zwei rechtwinklich aufeinander ausgerichteten Schenkeln 11, 12, von denen eine in Figur 5 gezeigt ist. Der Körper 10 ist hier aus Blech oder Metallband ausgestanzt und rechtwinklig umgebogen. Die Unterseite jeder dieser Schenkel 11, 12 bildet eine Anlegefläche, beziehungsweise 13, 14, die dazu vorgesehen ist, sich an die Außenseite der Flansche 6, 7 einer der zu verbindenden Profilelemente 2 anzulegen.

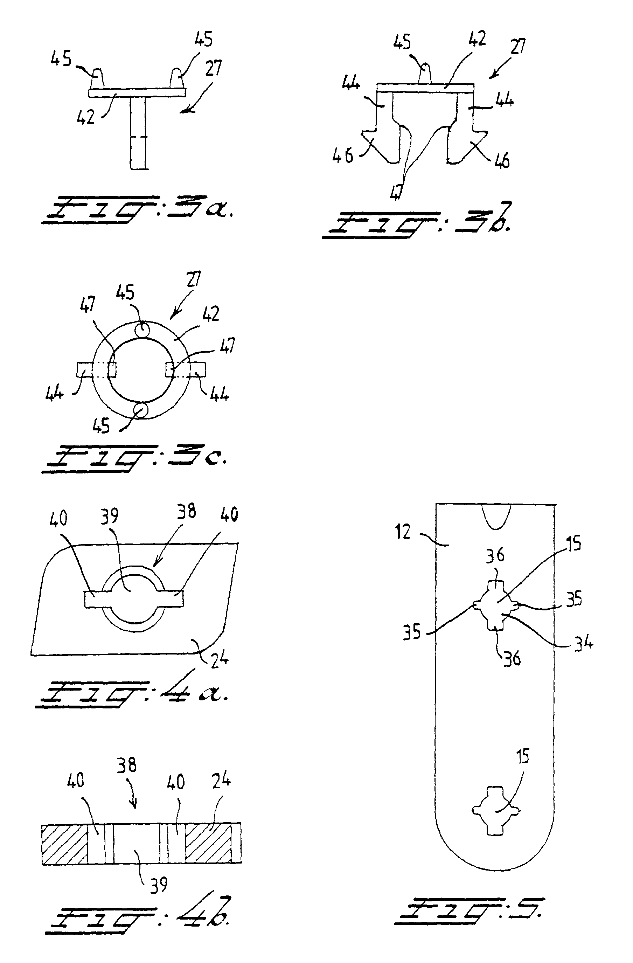

In jeder der Schenkel 11, 12 sind zwei Öffnungen 15 angeordnet, die sich ab der Oberseite bis an die Anlegefläche der betreffenden Schenkel und im wesentlichen rechtwinklig auf die Anlegefläche ausgerichtet sind. Wie in den Figuren 1 und 2 ersichtlich ist, steckt durch jede dieser Öffnungen 15 eine näher zu erläuternde Bolzeneinheit 20.

Die Bolzeneinheiten 20 dienen dazu, den Körper 10 gut an den Flanschen 6, 7 der Profilelemente 2 festklemmen zu können. In der gezeigten Ausführungsform umfaßt jede Bolzeneinheit 20 die folgenden Teile:
- einen Schraubenbolzen 21 mit einem Sechskantbolzenkopf 22, und einen mit einem Außengewinde versehenen Schaft 23. Hierbei liegt der Bolzenkopf 22 an der Oberseite der betreffenden Schenkel 11, 12 und steckt der Schaft 23 durch die Öffnung 15.
- eine längliche metallene Mutter 24, die im einzelnen in den Figuren 4a,4b gezeigt ist, und an der Seite der Anlegefläche auf den Schaft 23 des Schraubenbolzens 21 geschraubt ist,
- eine metallene Unterlegscheibe 25, durch die der Schaft 23 des Bolzens 21 hindurchragt, so daß die Unterlegscheibe 25 unten an dem Bolzenkopf 22 anliegt. Die Unterlegscheibe 25 ist im einzelnen in den Figuren 7a,7b gezeigt.
- ein Federelement 26 aus Kunststoff, daß im einzelnen in den Figuren 6a,6b,6c gezeigt ist und zwischen der Unterlegscheibe 25 und den Schenkeln 11, 12 des starren Körpers 10 angeordnet ist. In dem vormontierten Zustand der Befestigungseinheit 1 drückt das Federelement 26 den Bolzenkopf 22 mit einer leichten Vorspannung von dem starren Körper 10 weg.
- ein Nockenteil 27 aus Kunststoff, das im einzelnen in den Figuren 3a,3b und 3c gezeigt ist. Das Nockenteil 27 ist fest mit der Mutter 24 verbunden.

Wie weiter unten noch im einzelnen erläutert werden wird, bewirkt das Eingreifen des Nockenteils 27 in die speziell gebildete Öffnung 15 in dem Körper 10, daß die Mutter 24 gegen eine unerwünschte Verdrehung aus der Vormontagestellung heraus gesichert ist. Die Vormontagestellung bedeutet hier, daß die zu einem Schenkel 11 oder 12 gehörenden Muttern 24 mit ihrer Längsachse in der Verlängerung voneinander, parallel zu der Längsachse des betreffenden Schenkels liegen. Hierdurch kann die Befestigungseinheit 1 mit jeder ihrer Anlegeflächen 13, 14 an den Flanschen 6, 7 eines Profilelements 2 angeordnet werden, wobei die Muttern 24 dann in den Längsschlitz zwischen den Flanschen 6, 7 gelangen. Selbstverständlich kann dieser Vorteil auch auf eine Befestigungseinheit angewendet werden, wobei bei der Anlegefläche nur eine einzige längliche Mutter vorhanden ist.

Dadurch, daß nunmehr der Bolzenkopf 22, zum Beispiel manuell, in Richtung auf den Körper 10, gegen die Federkraft des Federelements 26, gedrückt wird, kommt das Nockenteil 27 außer Eingreifung mit dem Körper 10. Danach kann die Mutter 24 in ihre Haltestellung gedreht werden, in der die Enden der Mutter 24 jeweils einen Flansch 6,7 des Profilelements 2 hintergreifen. Wenn anschließend die Bolzeneinheit losgelassen wird, hält das Federelement 26 die Mutter 24 unter Vorspannung an der Innenseite der Flansche 6, 7. Vorzugsweise ist diese Vorspannung derart, daß die Bolzeneinheit 20 noch manuell entlang dem Profilelement 2 verschiebbar ist. Dadurch, daß der Bolzen 21 weiter angezogen wird, werden die Flansche 6, 7 fest zwischen der Mutter 24 und der Unterlegscheibe 25 eingeklemmt, und sitzt die Befestigungseinheit ganz fest an dem Profilelement 2.

Nachfolgend werden die unterschiedlichen Teile der Befestigungseinheit 1 weiter im einzelnen erläutert werden.

Die Öffnungen 15 in dem starren Körper 10 sind nicht, wie bei den bekannten Befestigungseinheiten des hier gemeinten Typs, kreisförmig, sondern haben jeweils ein kreisförmiges zentrales Teil 34 mit je zwei Paaren diametral einander gegenüberliegenden Aussparungen, hiernach jeweils erste Aussparungen 35 und zweite Aussparungen 36 genannt. Diese Aussparungen 35, 36 grenzen an den zentralen Teil 34 der Öffnung 15 und bilden mit diesem zentralen Teil 34 eine gemeinsame Öffnung 15. Der Durchmesser des zentralen Teils 34 ist geringfügig größer als der Durchmesser des Schafts 23 des Bolzens 21.

Die Mutter 24 ist vorzugsweise aus Blech oder Metallband ausgestanzt. Die Oberseite 24a der Mutter 24 liegt in dem vormontierten Zustand entlang der Anlegefläche des zugehörigen Schenkels des Körpers 10. Die gegenüberliegende Seite 24b wird hier als die Unterseite der Mutter 24 angedeutet.

Die Mutter 24 ist länglich mit einer Länge, die größer als die Breite des Langslochs 8 ist, und einer Breite, die vorzugsweise ein wenig kleiner als die Breite der Längsnut 8 ist.

Die Mutter 24 ist mit einer sich zwischen der Oberseite 24a und der Unterseite 24 erstreckenden Öffnung 38 mit einem mit einem Innengewinde versehenen zentralen Teil 39 versehen, in das der Bolzen 21 bei der Vormontage eingeschraubt worden ist. Diametral zu dem zentralen Teil 38 sind Aussparungen 40 vorhanden, die sich zwischen der Oberseite 24a und der Unterseite 24b der Mutter 24 erstrecken.

Das Nockenteil 27 ist hier mittels eines Spritzgießens aus einem geeigneten Kunststoffmaterial hergestellt. Das Nockenteil 27 umfaßt ein Ringteil 42 mit einer zentralen Öffnung 43, durch die der Schaft 23 des Bolzens 21 hindurchragt, und weiter an der Unterseite des Ringteils 42 zwei diametral einander gegenüberliegende und nach unten ragende Verbindungsschenkel 44. An der Oberseite des Ringteils 42 sind diametral einander gegenüberliegende und ab dem Ringteil 42 aufragende Nocken 45 gebildet.

In dem vormontierten Zustand stecken die Verbindungsschenkel 44 des Nockenteils 27 in den Schlitzaussparungen 40 der Mutter 24. An dem unteren Ende eines jeden Verbindungsschenkels 44 befindet sich ein herausragender Hakenvorsprung 46, mit dem der Verbindungsschenkel 44 die Unterseite der Mutter 24 untergreift. Weiter hat jeder Verbindungsschenkel 44 einen nach innen gerichteten Anschlag 47, welche Anschläge 47 einen Abstand voneinander haben können, der, wie hier gezeigt, geringfügig kleiner als der Durchmesser des Schaftes 23 des Bolzens 21 ist. Somit können diese an dem Nockenteil 27 angeformten Anschläge 47 als eine Begrenzung der Einschraubtiefe des Bolzens 21 bei der Vormontage der Befestigungseinheit 1 dienen. Durch die Anschläge 47 wird auch erreicht, daß die Mutter 24 zuverlässig mit dem Bolzen 21 mitdreht, wenn die Mutter 24 von der Vormontagestellung in die Haltestellung gedreht wird. In Figur 2 ist der Bolzen 21 nur der Deutlichkeit halber etwas weniger weit eingedreht angegeben. Beim weiteren Anziehen des Bolzens 21 schneidet das Gewinde des Bolzens 21 in die Anschläge 47 und zugleich können die Anschläge 47 ein wenig elastisch nach außen ausweichen. Der Außendurchmesser des Ringteils 42 ist kleiner als die Breite der Längsnut 8 in dem Profilelement 2.

Ersichtlich ist, daß sich die Aussparungen 40 auf der Längsachse der Mutter 24 befinden, um so die Mutter 24 so wenig wie möglich zu schwächen. Weiter ist ersichtlich, daß die Nocken 45 auf der Querachse der Mutter 24 liegen.

In dem vormontierten Zustand stecken die Nocken 45 in den ersten Aussparungen 35 des Schenkels des starren Körpers 10, wobei das Federelement 26 die Mutter 24 mit dem auf dieser liegenden Ringteil 42 des Nockenteils 27 an dem starren Körper hält. Durch den Eingriff der Nocken 45 in die Aussparungen 35 kann sich die Mutter 24 nicht unerwünscht aus der Vormontagestellung heraus verdrehen.

Wie bereits eher beschrieben, kann, dadurch daß der Bolzen 21 nach unten gedrückt wird, das Eingreifen der Nocken 45 in die Öffnung 15 aufgehoben werden, und kann anschließend die Mutter 24 in ihre Haltestellung gedreht werden. Wenn die Bolzeneinheit in dieser Haltestellung losgelassen wird, bewirkt das Federelement 26, daß sich die Mutter 24 wieder in Richtung auf den Körper 10 bewegt, und die Nocken 45 gelangen in die zweiten Aussparungen 36 dieser Öffnung 15. Vorzugsweise haben die Nocken 45 eine solche Höhe, daß, wenn die Mutter 24 mit ihrer Oberseite an der Innenseite der Flansche 6, 7 des Profilelements 2 anliegt, die Nocken 45 in den zweiten Aussparungen 36 stecken, aber nicht den starren Körper 10 überragen. Durch den Eingriff der Nocken 45 in die zweiten Aussparungen 36 ist gewährleistet, daß die Mutter 24 nicht unerwünscht aus der Haltestellung heraus in die Vormontagestellung zurückdrehen kann. Dies ist besonders vorteilhaft, weil es jetzt nicht notwendig ist, den Bolzen 21 anzuziehen, um zum Beispiel die Befestigungseinheit provisorisch an ein vertikal ausgerichtetes Profilelement 2 festzuklemmen. Hierbei liefert das Federelement 26 eine Klemmkraft, die ausreichend ist, um die Befestigungseinheit festzuhalten, wobei die Befestigungseinheit entlang dem Profilelement verschoben werden kann, um die richtige Stelle einzustellen.

Aus der Figur 5 stellt sich heraus, daß die zweiten Aussparungen 36 sich über einen größeren Winkelbereich als die ersten Aussparungen 35 um das zentrale Öffnungsteil erstrecken, wodurch die Haltestellung der Mutter 24 innerhalb eines bestimmten Winkelbereichs variieren kann. Dies ist insbesondere vorgesehen, um die Befestigungseinheit für Profilelemente, deren innerer Abstand zwischen den Seiten innerhalb eines bestimmten Bereichs liegt, geeignet zu machen.

Die Anwendung eines vorzugsweise durch Spritzgießen hergestelltes Nockenteils 27 aus Kunststoff ermöglicht es, die metallene Mutter 24 in bekannter und billiger Weise weiter herzustellen, was für ein derartiges Massenprodukt ein wichtiger Einfluß auf den Kostpreis hat. Auch braucht das Nockenteil 27 nicht einer hochwertigen Qualität zu sein, weil derartige Befestigungseinheiten in der Regel nur ein einziges Mal montiert werden.

Es wird deutlich sein, daß das Nockenteil 27 aus Kunststoff auch ganz anders ausgeführt sein kann, um die beschriebene Sicherungsfunktion für die Mutter 24 zu erfüllen, zum Beispiel mit einem ringförmigen Teil, das statt der gezeigten Verbindungsschenkel 44 um die Mutter 24 herumliegt. In einer anderen Variante ist das Nockenteil beim Spritzgießen an die metallene Mutter angegossen.

In einer anderen Variante ist das Nockenteil fest an dem starren Körper angeordnet, und sind die zugehörigen Öffnungen, in denen die Nocken des Nockenteils in der Vormontagestellung stecken, in der länglichen Mutter angeordnet worden.

Das gezeigte Federelement 26 ist ein einteiliger Kunststoffteil, der vorzugsweise durch Spritzgießen aus einem elastischen Kunststoff hergestellt worden ist. Das Federelement 26 umfaßt ein ringförmiges zentrales Teil 50 mit in diesem einer Öffnung 51, durch die der Schaft 23 des Bolzens 21 hindurchragt. An dem Ringteil 50 sind zwei im wesentlichen diametral zueinander nach außen gerichtete Arme 52 angeformt, und weiter sind auf der Oberseite des zentralen Ringteils 50 zwei diametral einander gegenüberliegende und aufragende Nocken 53 gebildet.

Die beiden Arme 52 schließen an ihrem Ende an ein ringförmiges Teil 54 an. Dieses ringförmige Teil 54 hat in unbelastetem Zustand, sieh Figuren 6a-c, eine solche Form, daß die Mitte einer jeden zwischen den Enden der Arme 52 liegenden Hälfte dieses Teils, bei A in Figur 6a, tiefer als der Anschluß des Teils 54 an die Arme 52 liegt. In flachgedrücktem Zustand, wenn der Bolzen 21 angezogen ist, hat das Ringteil 54 jedoch eine Kreisringform mit einem Innendurchmesser, der im wesentlich dem Außendurchmesser der Unterlegscheibe 25 gleicht, so daß das Teil 54 des Federelements 26 dann um die Unterlegscheibe 25 herum liegt.

An dem Ende eines jeden der Arme 52 ist jeweils ein Greifvorsprung 55 vorhanden, so daß das Federelement zwischen Daumen und Zeigefinger angefaßt werden kann.

Die metallene Unterlegscheibe 25 ist kreisförmig und hat eine Öffnung 60 mit einem zentralen Teil 61, durch die der Schaft 23 des Bolzens 21 durchragt, und mit zwei diametral liegenden, an das zentrale Teil 61 angrenzenden Aussparungen 62. In diesen Aussparungen 62 stecken die Nocken 53 des Federelements 26.

Figur 7b ist eine Ansicht der Unterlegscheibe in Richtung auf den Pfeil B in Figur 7a und zeigt, daß an der Unterseite der Unterlegscheibe 25 eine Nut 63 vorhanden ist. Diese Nut 63 verläuft quer entlang der Unterseite der Unterlegscheibe 25 und dient zum Aufnehmen der Arme 52 des Federelements 26. Hierdurch gelangen diese Arme 52 beim Anziehen des Bolzens 21 nicht zwischen die Unterlegscheibe 25 und den starren Körper 10.

An der Innenseite der Greifvorsprünge 55 des Federelements 26 sind Klemmlippen 56 angeformt, die die Unterlegscheibe 25 lösbar an dem Federelement 26 befestigen. Hierbei beugen die Nocken 53 vor, daß sich der Ring 25 seitlich verschieben kann.

Bei der Herstellung der Befestigungseinheit 1 wird vorzugsweise zuerst ein Gefüge von Unterlegscheibe 25 und Federelement hergestellt, bevor dieses Gefüge auf den Bolzen 21 aufgesteckt wird.

Es wird deutlich sein, daß das Federelement 26 und die Unterlegscheibe 25 auch ganz anders ausgeführt sein können, um den eher erläuterten Sicherungseffekt zu erreichen. Auch würde völlig auf die Unterlegscheibe 25 verzichtet werden können, zum Beispiel wenn die Feder eine Stahlfeder ist, die beim Anziehen des Bolzens zu einer flachen Platte zusammengedrückt wird.

In einer nicht gezeigten Variante kann die Bolzeneinheit aus einem Stück Gewindestange aufgebaut sein, mit auf dieser einem länglichen Mutterkörper an der Seite der Anlegefläche des Körpers 20 und einer üblichen Mutter an der anderen Seite des Körpers. Hierbei kann die Gewindestange in jeder geeigneten Weise an dem Mutterkörper festgesetzt sein, oder sogar mit diesem ein metallenes Ganzes bilden. Die Mutter an der Oberseite des Körpers ist dann vorzugsweise eine übliche Sechskantmutter.

Weiter können die Profilelemente auch eines solchen in der US 4 830 531 gezeigten Typs sein, bei dem die Flansche an ihren freien Längsrändern mit auf den Boden gerichteten Endteilen versehen sind. Dabei ist es vorteilhaft, wenn die die Flansche hintergreifende Mutter an der auf die Flansche gerichteten Oberseite mit zwei parallelen Nuten zum in ihre Haltestellung Aufnehmen der Endteile der Profilelementflansche versehen ist.

Er wird deutlich sein, daß der Körper auch eine andere Form als die in der Zeichnung gezeigte haben kann, zum Beispiel T-förmig zum Verbinden von drei Profilelementen, oder kreuzförmig zum Verbinden von vier Profilelementen.

Der Körper 10 kann bei jeder Anlegefläche 13, 14 mit einem oder mehreren nach unten ragenden Positionierungsvorsprüngen versehen sein, die zum Beispiel in solcher Weise auf der Längsachse eines Schenkels des starren Körpers diametral zu der Öffnung 15 liegen, daß diese Vorsprünge bei einer Anordnung des Körpers 10 an einem Profilelement 2 zwischen den Flanschen 6, 7 passen. Hierdurch wird eine Verdrehung des Körpers 10 zu den Profilelementen 2 vermieden, und kann eine stabile Verbindung zwischen mehreren Profilelementen 2 erreicht werden.

## Patentansprüche

1. Vormontierte Befestigungseinheit (1) zum Verbinden eines Profilelements mit einem oder mehreren Gegenständen, zum Beipiel einem oder mehreren ähnlichen Profilelementen, welches Profilelement eines Typs mit zwei aufeinander gerichteten Flanschen ist, die zwischen sich einen Längsschlitz begrenzen, welche Befestigungseinheit umfaßt:
- einen im wesentlichen starren Körper (10), der eine oder mehrere Anlegeflächen definiert, die jeweils dazu vorgesehen sind, an den Flanschen eines Profilelements anzuliegen, welcher starrer Körper (10) weiter bei jeder Anlegefläche mit zumindestens einer Öffnung für ein stabförmiges Bolzenteil (20) versehen ist,
- einen länglichen Mutterkörper (24), der in einer Vormontagestellung relativ zu dem starren Körper (10) an dem starren Körper (10) vormontiert ist, welcher Mutterkörper (24) sich an der Seite der Anlegefläche (13, 14) befindet, und weiter eine dem starren Körper (10) zugewandte Oberseite hat und dieser gegenüber eine Unterseite, wobei der längliche Mutterkörper (24) eine solche Länge und Breite aufweist, daß der längliche Mutterkörper (24) in seiner Vormontagestellung zwischen den Flanschen des Profilelements passieren kann und in eine relativ hierzu gedrehte Haltestellung gedreht werden kann, in der der längliche Mutterkörper (24) die Flansche des Profilelements hintergreift,
wobei die Befestigungseinheit weiter Sicherungsmittel umfaßt, die den länglichen Mutterkörper gegen eine unerwünschte Verdrehung aus der Vormontagestellung relativ zu dem starren Körper sichern,
**dadurch gekennzeichnet, daß** die Sicherungsmittel umfassen:
- einen oder mehrere Nocken (45), und bei jedem der Nocken eine zugehörige Aussparung, in der der Nocken (45) steckt, wenn sich der längliche Mutterkörper in der Vormontagestellung befindet, so daß der längliche Mutterkörper gegen eine unerwünschte Verdrehung zu dem starren Körper gesichert ist,
- wobei ein Nocken (45) an dem länglichen Mutterkörper (24), und die zugehörige Aussparung (35) in dem starren Körper (10) angeordnet ist, oder
- wobei ein Nocken an dem starren Körper, und die zugehörige Aussparung (40) in dem länglichen Mutterkörper (24) angeordnet ist.

2. Befestigungseinheit nach Anspruch 1, bei der die Befestigungseinheit ein Federorgan umfaßt, das in solcher Weise aufgestellt und ausgeführt ist, daß das Federorgan den länglichen Mutterkörper in Richtung auf den starren Körper zwingt, wobei das Federorgan gestattet, daß der sich in seiner Vormontagestellung befindende längliche Mutterkörper in solcher Weise von dem starren Körper weggedrückt wird, daß jeder Nocken aus der zugehörigen ersten Aussparung freikommt, und der längliche Mutterkörper in die Haltestellung gedreht werden kann.

3. Befestigungseinheit nach Anspruch 1, bei der der längliche Mutterkörper und/oder der starre Körper aus Metall ist, und wobei der, bzw. die Nocken einen Teil eines Nockenteils aus Kunststoff ist, bzw. sind, das an dem länglichen Mutterkörper, oder dem starren Körper befestigt ist.

4. Befestigungseinheit nach einem oder mehreren der Ansprüche 1 - 3, bei der zu jedem Nocken eine zweite Aussparung gehört, in der ein Nocken des länglichen Mutterkörpers steckt, wenn sich dieser längliche Mutterkörper in der Haltestellung befindet.

5. Befestigungseinheit nach einem oder mehreren der vorhergehenden Ansprüche, bei der die ersten und/oder die zweiten Aussparungen in der Nähe der in dem starren Körper vorhandenen Öffnung für das stabförmige Bolzenteil gebildet sind.

6. Befestigungseinheit nach einem oder mehreren der vorhergehenden Ansprüche, bei der die ersten und/oder zweiten Aussparungen an die in dem starren Körper vorhandene Öffnung für des stabförmige Bolzenteil grenzen und mit diesem eine einzige Öffnung bilden.

7. Befestigungseinheit nach einem oder mehreren der vorhergehenden Ansprüche, bei der der längliche Mutterkörper mit einem mit einem Innengewinde versehenen Befestigungsloch versehen ist, und wobei bei der Vormontage kein stabförmiges Bolzenteil in dem Befestigingsloch angeordnet ist.

8. Befestigungseinheit nach einem oder mehreren der vorhergehenden Ansprüche 1-6, bei der das stabförmige Bolzenteil Teil der vormontierten Befestigungseinheit ist, und durch die zugehörige Öffnung in dem starren Körper vormontiert ist.

9. Befestigungseinheit nach Anspruch 8, bei der das stabförmige Bolzenteil und der Mutterkörper aus einem einzigen Materialstück hergestellt sind.

10. Befestigungseinheit nach Anspruch 8, bei der der längliche Mutterkörper mit einem Befestigungsloch versehen ist, in dem bei der Vormontage ein stabförmiges Bolzenteil in dem Befestigungsloch festgesetzt ist.

11. Befestigungseinheit nach Anspruch 10, bei der der längliche Mutterkörper mit einem mit einem Innengewinde versehenen Befestigungsloch versehen ist, und daß bei der Vormontage ein mit einem Außengewinde versehenes stabförmiges Bolzenteil in das Befestigungsloch hineingeschraubt ist.

12. Befestigungseinheit nach Anspruch 3, bei der der längliche Mutterkörper mit einem Befestigungsloch für das stabförmige Bolzenteil versehen ist, und wobei weiter eine oder mehrere an das Befestigungsloch angrenzende, und sich ab der Oberseite des länglichen Mutterkörpers erstreckende Aussparungen in dem länglichen Mutterkörper vorgesehen sind, und wobei das Nockenteil mit einem oder mehreren nach unten ragenden Verbindungsschenkeln, die jeweils in einer der genannten Aussparungen des länglichen Mutterkörpers passen, versehen ist.

13. Befestigungseinheit nach Anspruch 12, bei der das Befestigungsloch in dem Mutterkörper mit einem Innengewinde versehen ist, und das Bolzenteil in den Mutterkörper hineingeschraubt ist.

14. Befestigungseinheit nach Anspruch 12 oder 13, bei der zumindestens eine Aussparung für einen Verbindungsschenkel sich bis an die Unterseite des länglichen Mutterkörpers erstreckt, und der durch diesen hindurchragende Verbindungsschenkel unter dem Befestigungsloch herausragt und mit einem Hakenteil, das die Unterseite der Mutter hintergreift, versehen ist.

15. Befestigungseinheit nach einem oder mehreren der Ansprüche 12 - 14, bei der ein Verbindungsschenkel mit einem nach innen ragenden Anschlag versehen ist, welcher Anschlag die Einschraubtiefe eines vormontierten stabförmigen Bolzenteils bestimmt.

16. Befestigungseinheit nach Anspruch 4, bei der die zweiten Aussparungen großer als die ersten Aussparungen sind, so daß sich die Haltestellung des länglichen Mutterkörpers über einen größeren Winkelbereich zu dem starren Körper, als der zu der Vormontagestellung gehörende Winkelbereich erstreckt.

17. Befestigungseinheit nach Anspruch 3, bei der das Nockenteil mit einem Ringteil mit einer zentralen Öffnung für das stabförmige Bolzenteil versehen ist, wobei an der Unterseite des Ringteils ein oder mehrere Verbindungsschenkel gebildet sind, und wobei der oder die Nocken an der Oberseite des Ringteils gebildet sind.

18. Befestigungseinheit nach einem oder mehreren der vorhergehenden Ansprüche, bei der die Befestigungseinheit ein Unterlegscheibegefüge umfaßt, das an der von einer Anlegefläche abgewandten Seite des starren Körpers mittels eines durch die zugehörige Öffnung des starren Körpers gesteckten stabförmigen Bolzenteils vormontiert ist.

19. Befestigungseinheit nach Anspruch 18, bei der das Unterlegscheibengefüge eine starre Unterlegscheibe, sowie das Federorgan, das mit der Unterlegscheibe verbunden ist, umfaßt.

20. Befestigungseinheit nach Anspruch 19, bei der die Unterlegscheibe eine Oberseite und eine dem starren Körper zugewandte Unterseite hat, sowie mit einem Umfangsrand, welche Unterlegscheibe eine Öffnung zum Hindurchstecken des stabförmigen Bolzenteils hat, und wobei das Federorgan ein einteiliges Kunststoffteil mit einem ringförmigen zentralen Teil ist, das mit einer Öffnung in der Verlängerung der Öffnung in der Unterlegscheibe versehen ist, wobei an dem Ringteil zwei diametral zueinander nach außen gerichtetet Arme angeformt sind, welche Arme an ihren bei dem Umfangsrand der Unterlegscheibe vorhandenen Enden an ein ringförmiges Teil anschließen, das - in unbelastetem Zustand - eine solche Form hat, daß die Mitte einer jeden zwischen den Enden der Arme liegenden Hälfte dieses Teils tiefer als der Anschluß dieses ringförmigen Teils an die Arme liegt, und das - in flachgedrücktem Zustand - entlang dem Unfangsrand der Unterlegscheibe liegt, wobei die Unterlegscheibe an der Unterseite in solcher Weise mit einer Vertiefung zum Aufnehmen der Arme und dem ringförmigen zentralen Teil des Federorgans versehen ist, daß diese Teile des Federorgans nicht unter die Unterseite der Unterlegscheibe herausragen.

21. Befestigungseinheit nach einem oder mehreren der vorhergehenden Ansprüche, bei der der starre Körper zum gegenseitigen Verbinden mehrerer Profilelemente ausgelegt ist, und wobei bei zumindestens einer der Anlegeflächen für ein Profilelement mehrere längliche Mutterkörper vorgesehen sind.

22. Befestigungseinheit nach einem oder mehreren der vorhergehenden Ansprüche, bei der der starre Körper an der Seite einer Anlegefläche mit einem oder mehreren hervorstehenden Positionierungsvorsprüngen versehen ist, die bei Anordnung des starren Körpers mit der betreffenden Anlegefläche an einem Profilelement mit dem Profilelement zusammenwirken, und eine Montagestellung des starren Körpers relativ zu dem Profilelement definieren.

23. System zum Zusammensetzen eines Rahmens von Profilelementen, umfassend in Kombination Profilelemente, die jeweils zwei parallele und sich in Längsrichtung erstreckende Seiten, einen Boden, der die Seiten verbindet, und eine Oberseite haben, wobei die Oberseite von zwei ab den Seiten nach innen gerichteten Flanschen, die zwischen sich einen Längsschlitz begrenzen, und einer Befestigungseinheit nach einem oder mehreren der vorhergehenden Ansprüche gebildet ist.

## Claims

1. A pre-assembled fixing unit (1) for connecting a profile element to one or more objects, for example one or more similar profile elements, which profile element is of a type with two flanges directed towards one another and defining between them a longitudinal slot, which fixing unit comprises:
- a substantially rigid body (10) which defines one or more abutment surfaces each provided for abutting the flanges of a profile element, each abutment surface of said rigid body (10) being provided with at least one opening for a rod-shaped bolt part (21),
- an elongate nut body (24) which in a pre-assembly position relative to the rigid body (10) is pre-assembled on the rigid body (10), which nut body (24) is situated on the side of the abutment surface (13, 14), and also has a top surface facing the rigid body (10) and, opposite said top surface, an underside, the elongate nut body (24) having a length and width such that the elongate nut body (24) in its pre-assembly position can pass between the flanges of the profile element and can be rotated into a retaining position turned relatively thereto, in which retaining position the elongate nut body (24) engages behind the flanges of the profile element, the fixing unit (1) also comprising securing means which secure the elongate nut body (24) against unwanted turning out of the pre-assembly position relative to the rigid body (10),
**characterised in that** the securing means comprise:
- one or more lugs (45) and, at each of the lugs, an associated recess in which the lug (45) fits when the elongate nut body (24) is in the pre-assembly position, so that the elongate nut body (24) is secured against unwanted turning relatively to the rigid body (10),
- a lug (45) being disposed on the elongate nut body (24) and the associated recess (35) being disposed in the rigid body (10), or
- a lug being disposed on the rigid body and the associated recess being disposed in the elongate nut body (24).

2. A fixing unit according to claim 1, wherein the fixing unit comprises a spring means (26) which is so disposed and constructed that the spring means (26) forces the elongate nut body (24) in the direction of the rigid body (10), the spring means (26) enabling the elongate nut body (24) situated in its pre-assembly position to be pressed away from the rigid body (10) in such manner that each lug (45) is released from the associated first recess (35) and the elongate nut body (24) can be rotated into the retaining position.

3. A fixing unit according to claim 1, wherein the elongate nut body (24) and/or the rigid body (10) is/are of metal and wherein the lug or lugs (45) is/are part of a plastic lug part (27) which is fixed on the elongate nut body (24) or on the rigid body (10).

4. A fixing unit according to any one or more of claims 1 to 3, wherein each lug (45) is associated with a second recess (36) in which a lug (45) of the elongate nut body (24) fits when said elongate nut body (24) is in the retaining position.

5. A fixing unit according to any one or more of the preceding claims, wherein the first and/or the second recesses (35, 36) are formed near the opening (15) provided in the rigid body (10) for the rod-shaped bolt part (21).

6. A fixing unit according to any one or more of the preceding claims, wherein the first and/or second recesses (35, 36) adjoin the opening (15) provided in the rigid body (10) for the rod-shaped bolt part (21) and form a single opening therewith.

7. A fixing unit according to any one or more of the preceding claims, wherein the elongate nut body (24) is provided with an internally screwthreaded fixing hole (39), and wherein no rod-shaped bolt part (21) is disposed in the fixing hole (39) on pre-assembly.

8. A fixing unit according to any one or more of the preceding claims 1 to 6, wherein the rod-shaped bolt part (21) is part of the pre-assembled fixing unit and is pre-assembled in the rigid body (10) through the associated opening (15).

9. A fixing unit according to claim 8, wherein the rod-shaped bolt part (21) and the nut body (24) are made from a single piece of material.

10. A fixing unit according to claim 8, wherein the elongate nut body (24) is provided with a fixing hole (39) in which a rod-shaped bolt part (21) is fixed in the fixing hole (39) on pre-assembly.

11. A fixing unit according to claim 10, wherein the elongate nut body (24) is provided with an internally screwthreaded fixing hole (39) and in that on pre-assembly an externally screwthreaded rod-shaped bolt part (21) is screwed into the fixing hole (39).

12. A fixing unit according to claim 3, wherein the elongate nut body (24) is provided with a fixing hole (39) for the rod-shaped bolt part (21), and wherein furthermore one or more recesses (40) adjoining the fixing hole (39) and extending from the top surface of the elongate nut body (24) are provided in the elongate nut body (24), and wherein the lug part is provided with one or more downwardly extending connecting limbs (44) each fitting in one of the said recesses (40) in the elongate nut body (24).

13. A fixing unit according to claim 12, wherein the fixing hole (39) in the nut body (24) is provided with an internal screwthread and the bolt part (21) is screwed into the nut body (24).

14. A fixing unit according to claim 12 or 13, wherein at least one recess (40) for a connecting limb (44) extends as far as the underside of the elongate nut body (24) and the connecting limb (44) passing therethrough projects beneath the fixing hole (39) and is provided with a hook part (46) which engages behind the underside of the nut.

15. A fixing unit according to one or more of claims 12 to 14, wherein a connecting limb (44) is provided with an inwardly extending stop (47), which stop defines the screw-in depth of a pre-assembled rod-shaped bolt part (21).

16. A fixing unit according to claim 4, wherein the second recesses (36) are larger than the first recesses (35) so that the retaining position of the elongate nut body (24) extends over a larger angular range relatively to the rigid body (10) than the angular range associated with the pre-assembly position.

17. A fixing unit according to claim 3, wherein the lug part (27) is provided with a ring part (42) with a central opening for the rod-shaped bolt part (21), one or more connecting limbs (44) being provided on the underside of the ring part (42), the lug or lugs (45) being formed on the top surface of the ring part (42).

18. A fixing unit according to any one or more of the preceding claims, wherein the fixing unit comprises a washer structure which at the side of the rigid body (10) remote from its abutment surface (13, 14) is pre-assembled by means of a rod-shaped bolt part (21) passed through the associated opening (15) in the rigid body (10).

19. A fixing unit according to claim 18, wherein the washer structure comprises a rigid washer (25) and the spring means (26) which is connected to the washer (25).

20. A fixing unit according to claim 19, wherein the washer (25) has a top surface and an underside facing the rigid body (10), and a peripheral edge, which washer (25) has an opening (61) for the passage of the rod-shaped bolt part (21), and wherein the spring means (26) is a one-piece plastic part with an annular central part (50) provided with an opening (51) in extension of the opening (61) in the washer (26), wherein there are formed on the ring part (50) two diametrically outwardly directed arms (52) which arms at their ends provided at the peripheral edge of the washer (25) adjoin an annular part (54) which - in the unloaded state - has a shape such that the centre of each half of said part (54) situated between the ends of the arms (52) is deeper than the junction of said annular part (54) to the arms (52), and which - in the pressed-flat state - lies along the peripheral edge of the washer (25), wherein the washer (25) is provided, on the underside, with a recess to receive the arms (52) and the annular central part (50) of the spring means (26) in such manner that said parts of the spring means (26) do not project beneath the underside of the washer (25).

21. A fixing unit according to any one or more of the preceding claims, wherein the rigid body (10) is designed for the mutual connection of a plurality of profile elements, and wherein a plurality of elongate nut bodies (25) are provided at least at one of the abutment surfaces (13, 14) for a profile element.

22. A fixing unit according to any one or more of the preceding claims, wherein the rigid body (10) is provided, at the side of an abutment surface (13, 14), with one or more projecting positioning projections which when the rigid body (10) is disposed with the relevant abutment surface (13, 14) against a profile element (2) co-operate with the profile element (2) and define an assembly position of the rigid body (10) relative to the profile element (2).

23. A system for assembling a frame consisting of profile elements (2), comprising in combination profile elements (2) each having two parallel sides (3, 4) extending in the longitudinal direction, a base (5) which connects the sides (3, 4), and a top surface, the latter being formed by two flanges (6, 7) which extend inwardly from the sides and which between them define a longitudinal slot (8), and a fixing unit according to one or more of the preceding claims.

## Revendications

1. Unité de fixation pré-montée (1) pour relier un élément profilé à un ou plusieurs objets, par exemple à un ou plusieurs éléments profilés semblables, lequel élément profilé est d'un type présentant deux collerettes orientées l'une vers l'autre, qui délimitent entre elles une fente longitudinale, laquelle unité de fixation comprend:
- un corps sensiblement rigide (10), qui définit une ou plusieurs surfaces d'appui, qui sont respectivement prévues afin de reposer sur les collerettes d'un élément profilé, lequel corps rigide (10) est en outre doté, au niveau de chaque surface d'appui, d'au moins une ouverture destinée à un élément de boulon en forme de tige (21),
- un corps d'écrou longitudinal (24), qui est pré-monté sur le corps rigide (10) dans une position de pré-montage par rapport au corps rigide (10), lequel corps d'écrou (24) se trouve sur le côté de la surface d'appui (13, 14), et a en outre un côté supérieur orienté vers le corps rigide (10), et un côté inférieur opposé à celui-ci, sachant que le corps d'écrou longitudinal (24) présente une longueur et une largeur telles que le corps d'écrou longitudinal (24) peut passer entre les collerettes de l'élément profilé dans sa position de pré-montage et peut être tourné dans une position d'arrêt, tournée par rapport à cette dernière, dans laquelle le corps d'écrou longitudinal (24) se met en prise derrière la collerette de l'élément profilé,
sachant que l'unité de fixation (1) comprend en outre des moyens de blocage, qui bloquent le corps d'écrou longitudinal (24) d'une rotation non souhaitée par rapport au corps rigide (10) à partir de la position de pré-montage,
**caractérisée en ce que** les moyens de blocage comprennent:
- une ou plusieurs saillies (45), et pour chacune des saillies, un évidement associé dans lequel se place la saillie (45), lorsque le corps d'écrou longitudinal (24) se trouve dans la position de pré-montage, de telle sorte que le corps d'écrou longitudinal (24) est bloqué d'une rotation non souhaitée par rapport au corps rigide (10),
- sachant qu'une saillie (45) est disposée sur le corps d'écrou longitudinal (24), et l'évidement associé (35) est ménagé dans le corps rigide (10), ou
- une saillie est disposée sur le corps rigide, et l'évidement associé est ménagé dans le corps d'écrou longitudinal (24).

2. Unité de fixation selon la revendication 1, dans laquelle l'unité de fixation comprend un organe de ressort (26), qui est installé et réalisé de telle sorte que l'organe de ressort (26) pousse le corps d'écrou longitudinal (24) en direction du corps rigide (10), sachant que l'organe de ressort (26) permet que le corps d'écrou longitudinal (24) se trouvant dans sa position de pré-montage puisse être écarté du corps rigide (10), de telle sorte que chaque saillie (45) soit dégagée du premier évidement associé (35), et que le corps d'écrou longitudinal (24) puisse être amené à tourner pour atteindre la position d'arrêt.

3. Unité de fixation selon la revendication 1, dans laquelle le corps d'écrou longitudinal (24) et / ou le corps rigide (10) est (sont) réalisé(s) en métal, et sachant que la ou les saillies (45) constitue(nt) une partie d'une pièce en saillie (27) en matiére plastique, qui est fixée sur le corps d'écrou longitudinal (24), ou sur le corps rigide (10).

4. Unité de fixation selon l'une quelconque ou plusieurs des revendications 1 à 3, dans laquelle à chaque saillie (45) est affecté un deuxième évidement (36), dans lequel se place une saillie (45) du corps d'écrou longitudinal (24), lorsque ce corps d'écrou longitudinal (24) se trouve dans la position d'arrêt.

5. Unité de fixation selon l'une quelconque ou plusieurs des revendications précédentes, dans laquelle les premier et / ou deuxième évidements (35, 36) sont ménagés à proximité de l'ouverture (15) existant dans le corps rigide (10) pour l'élément de boulon en forme de tige (21).

6. Unité de fixation selon l'une quelconque ou plusieurs des revendications précédentes, dans laquelle les premier et / ou deuxième évidements (35, 36) sont contigus à l'ouverture (15) existant dans le corps rigide (10) pour l'élément de boulon en forme de tige (21) et forment une seule ouverture avec celui-ci.

7. Unité de fixation selon l'une quelconque ou plusieurs des revendications précédentes, dans lequel le corps d'écrou longitudinal (24) est doté d'un trou de fixation (39) muni d'un filetage intérieur, et sachant que lors du pré-montage, il n'est pas disposé d'élément de boulon en forme de tige (21) dans le trou de fixation (39).

8. Unité de fixation selon l'une quelconque ou plusieurs des revendications précédentes 1 à 6, dans laquelle l'élément de boulon en forme de tige (21) est une partie de l'unité de fixation pré-montée, et est pré-monté dans le corps rigide (10) par l'intermédiaire de l'ouverture affectée (15).

9. Unité de fixation selon la revendication 8, dans laquelle l'élément de boulon en forme de tige (21) et le corps d'écrou (24) sont fabriqués à partir d'une seule pièce de matériau.

10. Unité de fixation selon la revendication 8, dans laquelle le corps d'écrou longitudinal (24) est doté d'un trou de fixation (39), dans lequel, lors du pré-montage, un élément d'écrou en forme de tige (21) est fixé dans le trou de fixation (39).

11. Unité de fixation selon la revendication 10, dans laquelle le corps d'écrou longitudinal (24) est doté d'un trou de fixation (39) muni d'un filetage intérieur, et en ce que, lors du pré-montage, un élément de boulon en forme de tige (21) muni d'un filetage extérieur est vissé à l'intérieur du trou de fixation (39).

12. Unité de fixation selon la revendication 3, dans laquelle le corps d'écrou longitudinal (24) est doté d'un trou de fixation (39) pour l'élément de boulon en forme de tige (21), et sachant qu'en outre, il est prévu dans le corps d'écrou longitudinal (24) un ou plusieurs évidements (40) contigu(s) au trou de fixation (39) et s'étendant depuis le côté supérieur du corps d'écrou longitudinal (24), et sachant que l'élément de saillie est doté d'une ou plusieurs ailes de raccordement (44) dépassant vers le bas, qui s'adaptent respectivement dans l'un des évidements (40) mentionnés du corps d'écrou longitudinal (24).

13. Unité de fixation selon la revendication 12, dans laquelle le trou de fixation (39) dans le corps d'écrou (24) est muni d'un filetage intérieur, et l'élément de boulon (21) est vissé à l'intérieur du corps d'écrou (24).

14. Unité de fixation selon la revendication 12 ou 13, dans laquelle au moins un évidement (40) pour une aile de raccordement (44) s'étend jusqu'au côté inférieur du corps d'écrou longitudinal (24), et l'aile de raccordement (44) traversant celui-ci dépasse sous le trou de fixation (39) et est doté d'un élément de crochet (46) qui s'engrène derrière le côté inférieur de l'écrou.

15. Unité de fixation selon l'une quelconque ou plusieurs des revendications 12 à 14, dans laquelle une aile de raccordement (44) est dotée d'une butée (47) faisant saillie vers l'intérieur, laquelle butée (47) détermine la profondeur de vissage d'un élément de boulon en forme de tige (21) pré-monté.

16. Unité de fixation selon la revendication 4, dans laquelle les deuxièmes évidements (36) sont plus grands que les premiers évidements (35), de telle sorte que la position d'arrêt du corps d'écrou longitudinal (24) s'étend sur une plus grande plage angulaire par rapport au corps rigide (10) que la plage angulaire associée à la position de pré-montage.

17. Unité de fixation selon la revendication 3, dans laquelle l'élément de saillie (27) est doté d'un élément annulaire (42) présentant une ouverture centrale pour l'élément de boulon en forme de tige (21), sachant que, au niveau du côté inférieur de l'élément annulaire (42) sont formées une ou plusieurs ailes de raccordement (44), et sachant que la ou les saillies (45) est (sont) formée(s) sur le côté supérieur de l'élément annulaire (42).

18. Unité de fixation selon l'une quelconque ou plusieurs des revendications précédentes, dans laquelle l'unité de fixation comprend une structure de rondelle plate qui est pré-montée sur le côté opposé à une surface d'appui (13, 14) du corps rigide (10) à l'aide d'un élément de boulon en forme de tige (21) placé par l'intermédiaire de l'ouverture (15) associée du corps rigide (10).

19. Unité de fixation selon la revendication 18, dans laquelle la structure de rondelle plate comprend une rondelle plate rigide (25) et l'organe de ressort (26) qui est relié à la rondelle plate (25).

20. Unité de fixation selon la revendication 19, dans laquelle la rondelle plate (25) a un côté supérieur et un côté inférieur orienté vers le corps rigide (10) et avec un bord périphérique, laquelle rondelle plate (25) ayant une ouverture (61) pour faire passer l'élément de boulon en forme de tige (21), et sachant que l'organe de ressort (26) est un élément en matière plastique d'un seul tenant avec un élément central annulaire (50), qui est doté d'une ouverture (51) dans le prolongement de l'ouverture (61) dans la rondelle plate (25), sachant que sur l'élément annulaire (50) sont formés deux bras (52) diamétralement opposés et orientés vers l'extérieur, lesquels bras (52), au niveau de leurs extrémités existant dans le bord périphérique de la rondelle plate (25), sont raccordés à un élément annulaire (54), qui - dans l'état non chargé - présente une forme telle que le centre d'une moitié de cet élément (54) se trouvant entre les extrémités des bras (52) est plus profonde que le raccordement de cet élément annulaire (54) aux bras (52), et qui se trouve - dans l'état plié à plat - le long du bord périphérique de la rondelle plate (25), sachant que la rondelle plate (25), au niveau du côté inférieur est dotée d'un renfoncement permettant de loger les bras (52) et l'élément central annulaire (50) de l'organe de ressort (26), de telle sorte que ces éléments de l'organe de ressort (26) ne dépassent pas en dessous du côté inférieur de la rondelle plate (25).

21. Unité de fixation selon l'une quelconque ou plusieurs des revendications précédentes, dans laquelle le corps rigide (10) est dimensionné pour relier entre eux plusieurs éléments profilés, et sachant que dans au moins l'une des surfaces d'appui pour un élément profilé, plusieurs corps d'écrou longitudinaux (24) sont prévus.

22. Unité de fixation selon l'une quelconque ou plusieurs des revendications précédentes, dans laquelle le corps rigide (10) sur le côté d'une surface d'appui (13, 14) est doté dune ou plusieurs proéminences faisant saillie, qui coopèrent avec l'élément profilé (2) lors de la disposition du corps rigide (10) sur un élément profilé (2) avec la surface d'appui concernée (13, 14), et définissent une position de montage du corps rigide (10) par rapport à l'élément profilé (2).

23. Système permettant de-composer un châssis d'éléments profilés (2), comprenant en combinaison des éléments profilés (2), qui ont respectivement deux côtés (3, 4) parallèles et s'étendant dans la direction longitudinale, un fond (5) qui relie les côtés (3, 4), et un côté supérieur, sachant que le côté supérieur est formé par deux collerettes (6, 7) orientées vers l'intérieur en partant des côtés, qui délimitent entre elles une fente longitudinale (8), et d'une unité de fixation selon l'une quelconque ou plusieurs des revendications précédentes.
